# EUROPEAN PATENT APPLICATION

(11) **EP 4 145 570 A1**
(43) Date of publication of application: **08.03.2023**
(21) Application number: 21796657.1
(22) Date of filing: 27.04.2021
(51) Int. Cl.: H01M 8/0206, H01M 8/0228, H01M 8/0247, H01M 8/0258, H01M 8/04, H01M 8/12, H01M 8/1226, H01M 8/2432, H01M 8/2475

(54) **CELL, CELL STACK DEVICE, MODULE, AND MODULE HOUSING DEVICE**

(30) Priority: 30.04.2020 JP 2020080853
(71) Applicant: Kyocera Corporation, Kyoto-shi Kyoto 612-8501 (JP)
(72) Inventor: SENO, Hiroaki, Kyoto-shi, Kyoto 612-8501 (JP); FUJIMOTO, Tetsuro, Kyoto-shi, Kyoto 612-8501 (JP)
(74) Representative: Viering, Jentschura & Partner mbB Patent- und Rechtsanwälte
(86) International application number: PCT/JP2021/016780
(87) International publication number: WO 2021/221052

(57) **Abstract**

A cell includes an element portion, a gas-flow passage, a first metal portion, a second metal portion, and a reinforcing portion. Reaction gas flows through the gas-flow passage. The first metal portion is located between one surface side of the gas-flow passage and the element portion, and supports the element portion. The second metal portion is located on the other surface side opposite to the one surface side of the gas-flow passage. The reinforcing portion is located inside the gas-flow passage and faces the first metal portion and the second metal portion.

## Description

### TECHNICAL FIELD

The present disclosure relates to a cell, a cell stack device, a module, and a module housing device.

### BACKGROUND OF INVENTION

In recent years, various fuel cell stack devices each including a plurality of fuel cells have been proposed as next-generation energy. The plurality of fuel cells each are a type of cell capable of obtaining electrical power, by using a fuel gas such as a hydrogen-containing gas and an oxygen-containing gas such as air.

### CITATION LIST

### PATENT LITERATURE

### Patent Document 1: JP 2016-195029 A

### SUMMARY

In an aspect of an embodiment, a cell includes an element portion, a gas-flow passage, a first metal portion, a second metal portion, and a reinforcing portion. Reaction gas flows through the gas-flow passage. The first metal portion is located between one surface side of the gas-flow passage and the element portion, and supports the element portion. The second metal portion is located on the other surface side opposite to the one surface side of the gas-flow passage. The reinforcing portion is located inside the gas-flow passage and faces the first metal portion and the second metal portion.

Also, a cell stack device of the present disclosure includes a cell stack including a plurality of the cells mentioned above.

Also, a module of the present disclosure includes the cell stack device mentioned above and a housing container that houses the cell stack device.

Also, a module housing device of the present disclosure includes the module mentioned above, an auxiliary device for operating the module, and an external case that houses the module and the auxiliary device.

### BRIEF DESCRIPTION OF DRAWINGS

FIG. 1A is a cross-sectional view illustrating an example of a cell according to an embodiment.
FIG. 1B is a side view illustrating the example of the cell according to the embodiment as viewed from an air electrode side.
FIG. 2A is a perspective view illustrating an example of a cell stack device according to the embodiment.
FIG. 2B is a cross-sectional view taken along the line X-X illustrated in FIG. 2A.
FIG. 2C is a top view illustrating the example of the cell stack device according to the embodiment.
FIG. 3A is an exploded perspective view of a structure.
FIG. 3B is a perspective view of the structure illustrated in FIG. 3A.
FIG. 4A is a first cross-sectional view of the structure illustrated in FIG. 3B.
FIG. 4B is a second cross-sectional view of the structure illustrated in FIG. 3B.
FIG. 5A is a perspective view illustrating another example of the structure.
FIG. 5B is a perspective view illustrating another example of the structure.
FIG. 5C is a perspective view illustrating another example of the structure.
FIG. 5D is a perspective view illustrating another example of the structure.
FIG. 6A is an enlarged cross-sectional view of a region A illustrated in FIG. 1A.
FIG. 6B is a cross-sectional view illustrating another example of the region A illustrated in FIG. 1A.
FIG. 7A is a cross-sectional view illustrating an example of a cell according to a variation of the embodiment.
FIG. 7B is a developed view illustrating an example of a structure according to an embodiment.
FIG. 7C is a developed view illustrating another example of the structure according to the embodiment.
FIG. 8 is an exterior perspective view illustrating an example of a module according to an embodiment.
FIG. 9 is an exploded perspective view schematically illustrating an example of a module housing device according to an embodiment.

### DESCRIPTION OF EMBODIMENTS

Hereinafter, embodiments of a cell, a cell stack device, a module, and a module housing device disclosed in the present application will be described with reference to the accompanying drawings. The disclosure is not limited by the following embodiment.

Note, further, that the drawings are schematic and that the dimensional relationships between elements, the proportions thereof, and the like may differ from the actual ones. There may be differences between the drawings in the dimensional relationships, proportions, and the like.

### Configuration of Cell

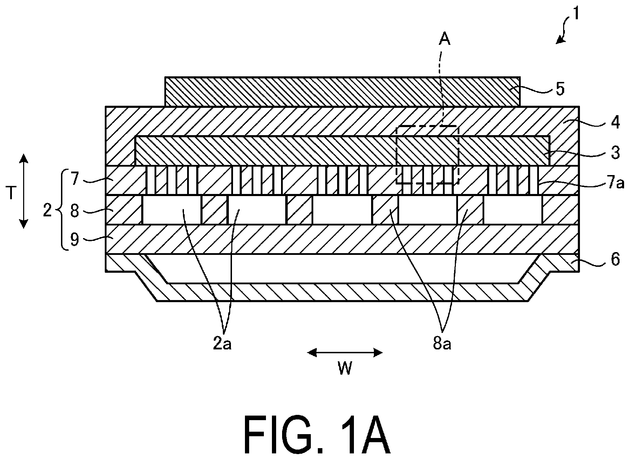

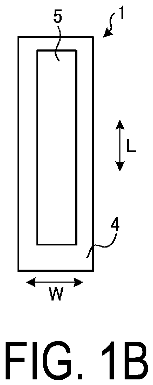

First, with reference to FIGs. 1A and 1B, an example of a solid oxide type fuel cell will be described as a cell according to an embodiment.

FIG. 1A is a cross-sectional view illustrating an example of a cell 1 according to an embodiment. FIG. 1B is a side view of the example of the cell 1 according to the embodiment as viewed from an air electrode 5 side. Note that FIGs. 1A and 1B illustrate an enlarged portion of each configuration of the cell 1.

In the example illustrated in FIGs. 1A and 1B, the cell 1 is hollow and flat plate-shaped. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a structure 2 and an element portion. The structure 2 has a stacked structure in which a plurality of metal members are stacked up in the thickness direction T. An electrically conductive member 6 is located between adjacent cells 1. The electrically conductive member 6 electrically connects a plurality of cells 1.

The element portion is located on one surface side of the structure 2. The element portion includes a fuel electrode 3, a solid electrolyte layer 4, and an air electrode 5. As illustrated in FIG. 1B, the air electrode 5 extends neither to the lower end nor the upper end of the cell 1. At a lower end portion of the cell 1, only the solid electrolyte layer 4 is exposed to the surface. Note that as illustrated in FIG. 1A, the solid electrolyte layer 4 is located on an end surface in the width direction W and the length direction L of the fuel electrode 3. Since the solid electrolyte layer 4 is located on the end surface of the fuel electrode 3, the leakage of the fuel gas and the oxygen-containing gas is less likely to occur. Note that instead of the solid electrolyte layer 4, a material having gas blocking properties may be positioned on the end surface of the fuel electrode 3. The material having gas blocking properties may be, for example, glass.

Hereinafter, each of constituent members constituting the cell 1 will be described.

The structure 2 includes therein gas-flow passages 2a through which the reaction gas flows. The structure 2 includes, for example, an inlet and an outlet of the gas-flow passages 2a at an end portion in the length direction L of the cell 1. The reaction gas supplied to the inlet of the gas-flow passages 2a flows through the gas-flow passages 2a located inside the structure 2, and is discharged from the outlet of the gas-flow passages 2a to the outside of the structure 2. The reaction gas is, for example, a fuel gas such as a hydrogen-containing gas. The structure 2 may include a portion that has gas permeability and transmits the fuel gas flowing through the gas-flow passages 2a to the fuel electrode 3. The structure 2 may have electrical conductivity. The structure 2 having electrical conductivity collects electricity in the electrically conductive member 6. Note that for the gas-flow passages 2a, each of the inlet and the outlet may be located at a respective one of both ends in the length direction L, or the inlet and the outlet may be located both at one end side in the length direction L.

The material of the structure 2 may be, for example, stainless steel. The structure 2 may contain, for example, a metal oxide.

A coating film may be positioned at a portion exposed to an oxidizing atmosphere, of the structure 2. For example, the cell 1 may include a coating layer that is located between the structure 2 and the oxidizing atmosphere and that contains at least any one of zinc, manganese, and cobalt.

As a result, the chromium (Cr) contained in the metal material of the structure 2 is less likely to be released into the oxidizing atmosphere during high-temperature operation. Therefore, according to the embodiment, the structure 2 can have enhanced durability, and thus the cell 1 can have enhanced durability.

A coating film may be positioned at a portion exposed to a reducing atmosphere, of the structure 2. For example, the cell 1 may include a coating layer that is located between the structure 2 and the reducing atmosphere and that contains CeO₂.

As a result, the constituent elements are less likely to be released from the portion exposed to the reducing atmosphere of the structure 2. Therefore, according to the embodiment, the structure 2 can have enhanced durability, and thus the cell 1 can have enhanced durability.

The structure 2 includes a support plate 7, a channel plate 8, and a sealing plate 9. The support plate 7 is a first metal portion located between the gas-flow passages 2a and the element portion. One surface of the support plate 7 supports the fuel electrode 3, and the other surface on the opposite side to that of the one surface of the support plate 7 faces the gas-flow passages 2a. The support plate 7 includes openings 7a that penetrate from the one surface to the other surface. The support plate 7 has gas permeability. For example, the support plate 7 can transmit the fuel gas through the openings 7a.

One surface of the channel plate 8 faces the support plate 7, and the other surface on the opposite side to that of the one surface of the channel plate 8 faces the sealing plate 9. The channel plate 8 includes gas-flow passages 2a through which the fuel gas flows. The gas-flow passages 2a are in communication with the openings 7a. The fuel gas flowing through the gas-flow passages 2a is supplied to the fuel electrode 3 through the openings 7a.

One surface of the sealing plate 9 faces the channel plate 8. The sealing plate 9 is a second metal portion that seals the gas-flow passages 2a. The other surface on the opposite side to that of the one surface of the sealing plate 9 is exposed to the oxidizing atmosphere. The electrically conductive member 6 is located on the other surface. The sealing plate 9 has gas blocking properties. For example, the sealing plate 9 does not transmit the fuel gas flowing through the gas-flow passages 2a. The support plate 7, which is the first metal portion, and the sealing plate 9, which is the second metal portion, face each other with the gas-flow passages 2a interposed therebetween.

The structure 2 further includes reinforcing portions 8a. The reinforcing portions 8a are located inside the gas-flow passages 2a. One surface of each of the reinforcing portions 8a faces the support plate 7, and the other surface on the opposite side to that of the one surface of each of the reinforcing portions 8a faces the sealing plate 9.

The reinforcing portions 8a extend in the length direction L of the cell 1. Since the reinforcing portions 8a are located inside the gas-flow passages 2a, deformation of the structure 2 such as, for example, bending of the support plate 7 and/or the sealing plate 9 can be reduced. Accordingly, the structure 2 has enhanced durability, and thus the cell 1 can have enhanced durability.

The reinforcing portions 8a located inside the gas-flow passages 2a impart pressure loss to the fuel gas flowing through the gas-flow passages 2a. Accordingly, the fuel gas flowing through the gas-flow passages 2a is easily supplied to the fuel electrode 3 via the opening 7a side. This improves the power generation performance of the cell 1.

The reinforcing portions 8a may be located as separate members, for example. Alternatively, the reinforcing portions 8a may be located as members integrated with another member located around the gas-flow passages 2a such as, for example, the channel plate 8 or the sealing plate 9.

As the material of the fuel electrode 3, a commonly known material may be used. As the material of the fuel electrode 3, a porous conductive ceramic, for example, or a ceramic containing ZrO₂ in which calcium oxide, magnesium oxide, or a rare earth element oxide is contained as a solid solution, and Ni and/or NiO may be used. As the rare earth element oxide, for example, Y₂O₃ or the like is used. Hereinafter, ZrO₂ in which calcium oxide, magnesium oxide, or a rare earth element oxide is contained as a solid solution may be referred to as stabilized zirconia. The stabilized zirconia also includes partially stabilized zirconia.

The solid electrolyte layer 4 is an electrolyte and bridges ions between the fuel electrode 3 and the air electrode 5. At the same time, the solid electrolyte layer 4 has gas blocking properties, and makes leakage of the fuel gas and the oxygen-containing gas less likely to occur.

The material of the solid electrolyte layer 4 may be, for example, ZrO₂ in which 3 mol% to 15 mol% of a rare earth element oxide is contained as a solid solution. As the rare earth element oxide, for example, Y₂O₃ or the like is used. Note that another material may be used as the material of the solid electrolyte layer 4, as long as the material has the aforementioned characteristics.

The material of the air electrode 5 is not particularly limited, as long as the material is commonly used for an air electrode. The material of the air electrode 5 may be, for example, a conductive ceramic such as an ABO₃ type perovskite oxide.

The material of the air electrode 5 may be, for example, a composite oxide in which Sr and La coexist in an A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

Further, the air electrode 5 has gas permeability. The open porosity of the air electrode 5 may be, for example, 20% or more, and particularly may be in a range from 30% to 50%.

### Configuration of Cell Stack Device

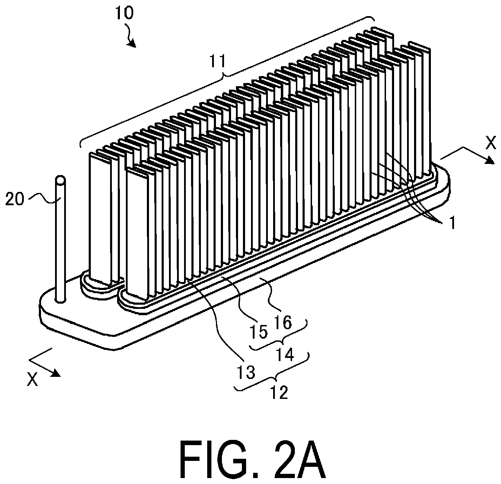

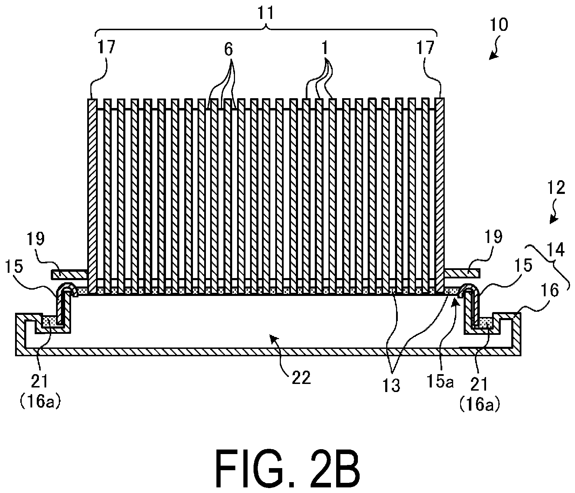

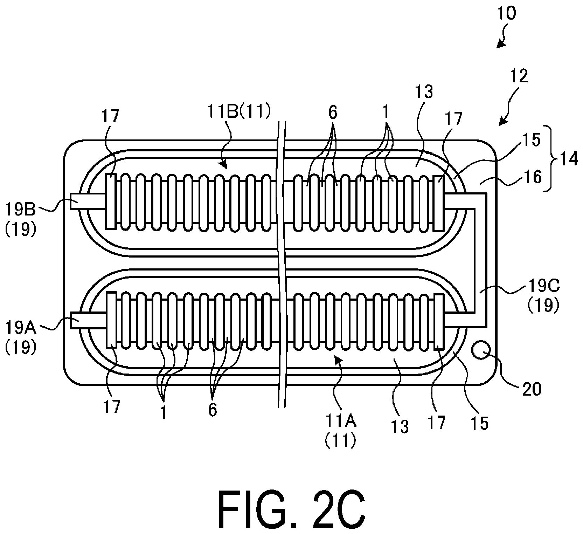

Next, a cell stack device 10 according to the present embodiment using the cell 1 described above will be described with reference to FIGs. 2A to 2C. FIG. 2A is a perspective view illustrating an example of the cell stack device 10 according to the embodiment. FIG. 2B is a cross-sectional view taken along the line X-X illustrated in FIG. 2A. FIG. 2C is a top view illustrating the example of the cell stack device 10 according to the embodiment.

As illustrated in FIG. 2A, the cell stack device 10 includes a cell stack 11 that includes a plurality of the cells 1 arrayed (stacked) in the thickness direction T (see FIG. 1A) of the cell 1, and a fixing member 12.

The fixing member 12 includes a bonding material 13 and a support member 14. The support member 14 supports the cells 1. The bonding material 13 bonds the cells 1 with the support member 14. Further, the support member 14 includes a support body 15 and a gas tank 16. The support body 15 and the gas tank 16, constituting the support member 14, are made of metal and electrically conductive.

As illustrated in FIG. 2B, the support body 15 includes an insertion hole 15a into which the lower end portion of the plurality of cells 1 are inserted. The lower end portions of the plurality of cells 1 and an inner wall of the insertion hole 15a are bonded by the bonding material 13.

The gas tank 16 includes an opening portion through which a reaction gas is supplied to the plurality of cells 1 via the insertion hole 15a, and a recessed groove 16a located in the periphery of the opening portion. An outer peripheral end portion of the support body 15 is fixed to the gas tank 16 by a fixing material 21 filled in the recessed groove 16a of the gas tank 16.

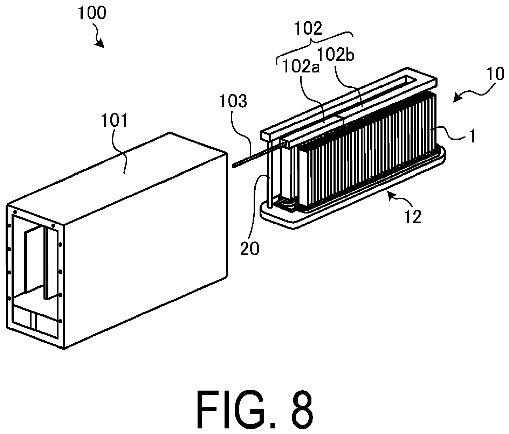

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through this gas circulation pipe 20, and is supplied from the gas tank 16 to the gas-flow passages 2a (see FIG. 1A) inside the cells 1. The fuel gas supplied to the gas tank 16 is produced by a reformer 102 (see FIG. 8), which will be described later.

A hydrogen-rich fuel gas can be produced, for example, by steam reforming a raw fuel. When the fuel gas is produced by the steam reforming, the fuel gas contains steam.

In the example illustrated in FIG. 2A, the cell stack 11 including a plurality of cells 1 includes two rows of cell stacks 11, two support bodies 15, and the gas tank 16. Two rows of the cell stacks 11 each have a plurality of cells 1. Each of the cell stacks 11 is fixed to a corresponding one of the support bodies 15. The gas tank 16 includes two through holes in an upper surface thereof. Each of the support bodies 15 is disposed in a corresponding one of the through holes. The internal space 22 is formed by the single gas tank 16 and the two support bodies 15.

The insertion hole 15a has, for example, an oval shape in a top surface view. The length of the insertion hole 15a, for example, in an array direction of the cells 1, that is, the thickness direction T thereof, is greater than the distance between two end current collectors 17 located at two ends of the cell stack 11. The width of the insertion hole 15a is, for example, greater than the length of the cell 1 in the width direction W (see FIG. 1A). Note that the shape of the insertion hole 15a may be substantially rectangular long in the array direction of the cells 1.

As illustrated in FIG. 2B, the bonding material 13 is filled and solidified in a bonding portion between the inner wall of the insertion hole 15a and the lower end portion of the cells 1. As a result, the inner wall of the insertion hole 15a and the lower end portion of the plurality of cells 1 are bonded and fixed, and the lower end portions of the cells 1 are bonded and fixed to each other. Each of the cells 1 includes, at the lower end portion thereof, the gas-flow passages 2a that communicate with the internal space 22 of the support member 14.

As the bonding material 13 and the fixing material 21, a material having a low conductivity such as glass can be used. As a specific material of the bonding material 13 and the fixing material 21, an amorphous glass or the like may be used, or particularly, a crystallized glass or the like may be used.

As the crystallized glass, for example, any one of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or particularly, a SiO₂-MgO-based material may be used.

As illustrated in FIG. 2B, an electrically conductive member 6 is interposed between adjacent cells 1 of the plurality of cells 1. The electrically conductive member 6 is bonded to the air electrode 5 with an adhesive. The electrically conductive member 6 includes an opening penetrating the electrically conductive member 6 in the thickness direction. Air is supplied to the air electrode 5 via this opening.

Further, as illustrated in FIG. 2B, the end current collectors 17 are electrically connected to the cells 1 located at the outermost sides in the array direction of the plurality of cells 1. The end current collectors 17 are each connected to an electrically conductive portion 19 protruding outward from the cell stack 11. The electrically conductive portion 19 collects electricity generated by the cells 1, and conducts the electricity to the outside. Note that in FIG. 2A, the end current collectors 17 are not illustrated.

Further, as illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collector 17 on a positive electrode side in the cell stack 11A. The negative electrode terminal 19B functions as a negative electrode when the electrical power generated by the cell stack 11 is output to the outside, and is electrically connected to the end current collector 17 on a negative electrode side in the cell stack 11B.

The connection terminal 19C electrically connects the end current collector 17 on a negative electrode side in the cell stack 11A and the end current collector 17 on a positive electrode side in the cell stack 11B. The material of the electrically conductive member 6, the end current collectors 17, and the electrically conductive portion 19 may each be a conductive metal or alloy, for example, stainless steel. The electrically conductive members 6, the end current collectors 17, and the electrically conductive portion 19 may include a coating layer containing, for example, at least any one of zinc, manganese, and cobalt.

### Configuration Example of Structure

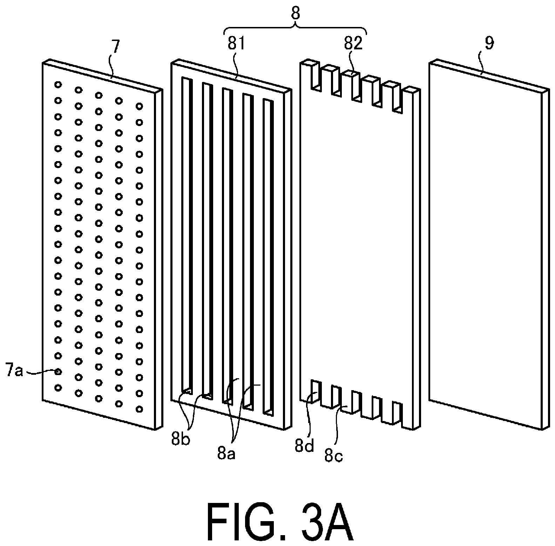

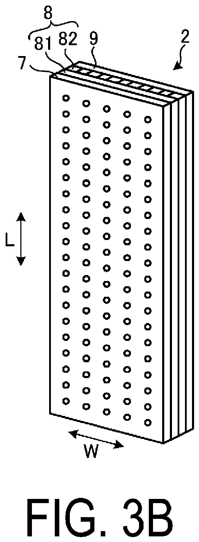

A specific configuration example of the structure 2 will be described with reference to FIGs. 3A to 4B. FIG. 3A is an exploded perspective view of a structure. FIG. 3B is a perspective view of the structure illustrated in FIG. 3A.

As illustrated in FIGs. 3A and 3B, the structure 2 includes the support plate 7, the channel plate 8, and the sealing plate 9. The support plate 7 includes openings 7a that penetrate the support plate 7 in the thickness direction.

The channel plate 8 includes a first channel plate 81 and a second channel plate 82. The first channel plate 81 includes reinforcing portions 8a and opening portions 8b. The opening portions 8b penetrate the first channel plate 81 in the thickness direction and extend in the length direction L. The opening portions 8b are located in plurality and side-by-side in the width direction W of the first channel plate 81. The reinforcing portions 8a are sandwiched between adjacent opening portions 8b.

The second channel plate 82 includes protruding portions 8c and cutout portions 8d. The protruding portion 8c and the cutout portion 8d are located at both ends in the length direction L of the second channel plate 82 so as to correspond to the reinforcing portions 8a and the opening portion 8b of the first channel plate 81, respectively.

The sealing plate 9 is a flat plate-shaped metal member. The support plate 7, the first channel plate 81, the second channel plate 82, and the sealing plate 9 have substantially the same dimensions in the length direction L and the width direction W. The support plate 7, the first channel plate 81, the second channel plate 82, and the sealing plate 9 are bonded to each other at least at the end portion in the length direction L and the width direction W by brazing, welding, or diffusion bonding, and are integrated as the structure 2. As illustrated in FIG. 3B, the structure 2 has a substantially rectangular parallelepiped shape.

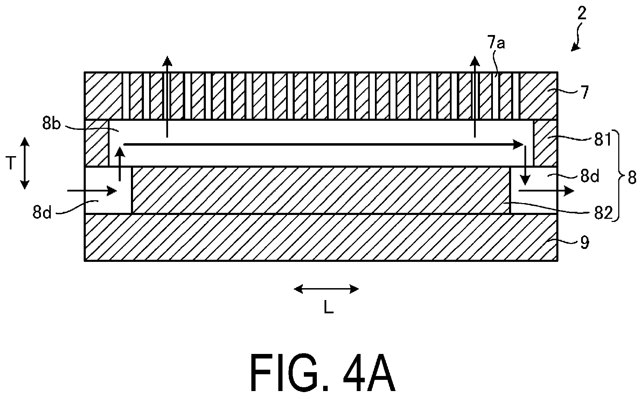

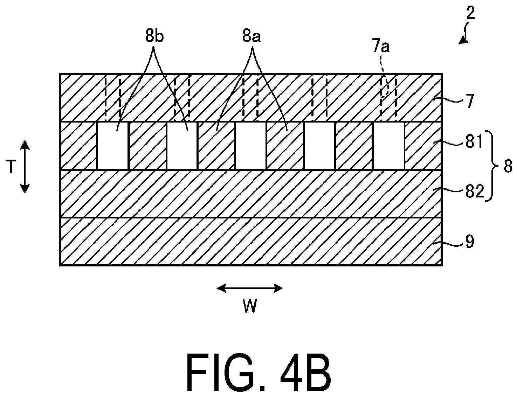

FIG. 4A is a first cross-sectional view of the structure illustrated in FIG. 3B. FIG. 4B is a second cross-sectional view of the structure illustrated in FIG. 3B. FIGs. 4A and 4B are cross-sectional views of the structure 2 illustrated in FIG. 3B as viewed in the thickness direction T of the structure 2 along the length direction L and the width direction W, respectively.

As illustrated in FIG. 4B, the reinforcing portions 8a face the support plate 7 that serves as the first metal portion and the second channel plate 82 that serves as the second metal portion. This can suppress deformation of the support plate 7 and the second channel plate 82.

The reinforcing portions 8a are integrally formed as part of the first channel plate 81 that serves as a third metal portion. This can reduce the number of parts and enhance the design accuracy of the structure 2. Since the structure 2 can have reduced bonding points, the structure 2 can have improved durability. Accordingly, the cell 1 including such a structure 2 has improved durability.

On the other hand, as illustrated in FIGs. 4A and 4B, the opening portions 8b are in communication with the cutout portion 8d of the second channel plate 82. As a result, the fuel gas supplied from the cutout portion 8d side located on one end side in the length direction L is discharged from the cutout portion 8d side located on the other end side in the length direction L via the opening portions 8b. That is, the opening portions 8b and the cutout portion 8d are also the gas-flow passages 2a illustrated in FIG. 1A.

Since the channel plate 8 is constituted by the first channel plate 81 and the second channel plate 82 stacked on each other, the fuel gas supplied to the inside of the structure 2 flows in the thickness direction T from the cutout portions 8d toward the opening portions 8b. Accordingly, the fuel gas flowing through the gas-flow passages 2a is easily supplied to the fuel electrode 3 (see FIG. 1A) via the opening 7a side. This improves the power generation performance of the cell 1.

### Variations of Structure

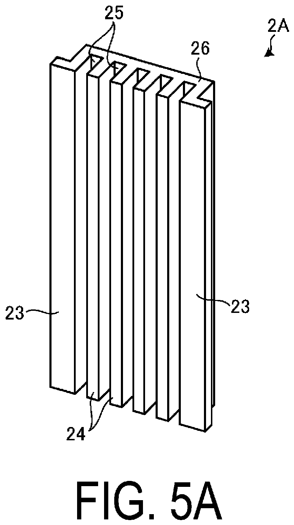

In the example described above, the structure 2 in which three or four metal members are stacked on each other has been described. However, the present disclosure is not limited thereto. FIGs. 5A to 5D are perspective views illustrating another example of the structure.

As illustrated in FIG. 5A, a structure 2A includes outer edges 23, reinforcing portions 24, channel portions 25, and a rear surface portion 26. The structure 2A also includes an unillustrated support plate 7 (see FIG. 3A).

The outer edges 23 and the reinforcing portions 24 abut on the support plate 7. The channel portion 25 corresponds to the gas-flow passages 2a (see FIG. 1A) located between the structure 2A and the support plate 7. The electrically conductive member 6 (see FIG. 1A) is located at the rear surface portion 26. That is, the structure 2A can be used in place of, for example, the channel plate 8 and the sealing plate 9 illustrated in FIG. 1A.

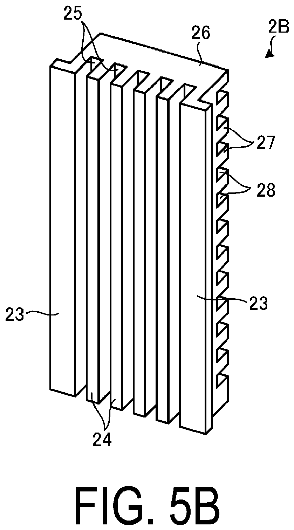

As illustrated in FIG. 5B, a structure 2B differs from the structure 2A in that protruding portions 27 and recessed portions 28 are located at the rear surface portion 26. The recessed portion 28 located at the rear surface portion 26 can be utilized as a gas-flow passages through which the oxygen-containing gas flows.

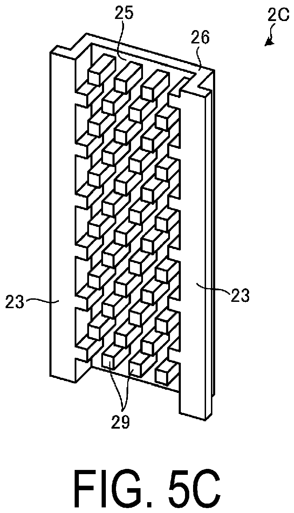

As illustrated in FIG. 5C, a structure 2C differs from the structure 2A in that the structure 2C includes a plurality of reinforcing portions 29 protruding from the channel portion 25 instead of the reinforcing portions 24 extending in the length direction. Even when such a structure 2C is used, the structure 2C including the support plate 7 can have improved durability. Accordingly, the cell 1 including such a structure 2C has improved durability.

The structure 2C including the reinforcing portions 29 imparts greater pressure loss to the reaction gas flowing through the channel portion 25 compared to the structure 2A including the reinforcing portions 24. Accordingly, the reaction gas flowing through the channel portion 25 is easily supplied to the fuel electrode 3 via the openings 7a side of the support plate 7. This improves the power generation performance of the cell 1.

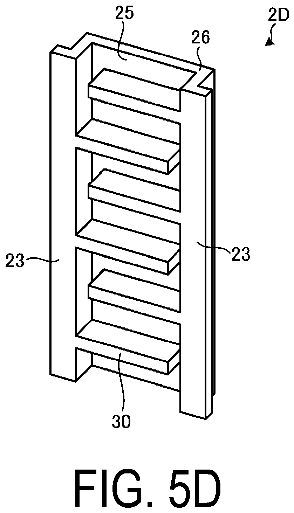

As illustrated in FIG. 5D, a structure 2D including reinforcing portions 30 extending in the width direction intersecting the length direction through which the reaction gas flows may be positioned in the cell 1. Since the reinforcing portions 30 extend so as to intersect the direction in which the reaction gas flows, the pressure loss imparted to the reaction gas flowing through the channel portion 25 is greater compared to a case in which reinforcing portions 24 extending along the direction in which the reaction gas flows are included. Accordingly, the reaction gas flowing through the channel portion 25 is easily supplied to the fuel electrode 3 via the opening 7a side of the support plate 7. This improves the power generation performance of the cell 1. Note that the length direction in which the reaction gas flows is a first direction, that is, the direction directed from the inlet toward the outlet of the gas-flow passages 2a. The width direction is a second direction, that is, the direction intersecting the first direction.

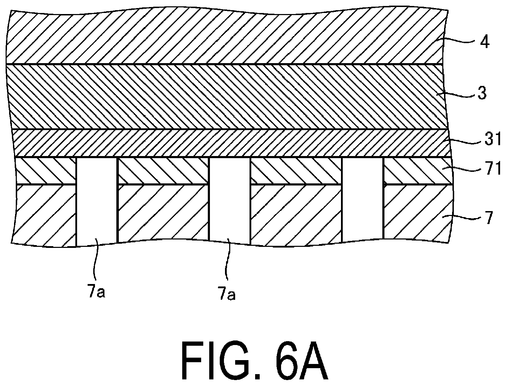

FIG. 6A is an enlarged cross-sectional view of a region A illustrated in FIG. 1A. As illustrated in FIG. 6A, a coating layer 71 is located on the surface on the fuel electrode 3 side of the support plate 7. An adhesive 31 having electrical conductivity is located between the fuel electrode 3 and the support plate 7 (coating layer 71), and adheres the fuel electrode 3 and the support plate 7 (coating layer 71) to each other.

The coating layer 71 is a natural oxide film containing, for example, chromium oxide (Cr₂O₃). The coating layer 71 may also contain electrically conductive particles and titanium. The electrically conductive particles contain, for example, nickel. The electrically conductive particles may also contain, for example, yttrium. The adhesive 31 contains electrically conductive particles such as Ni, for example, and inorganic oxides such as TiO₂ and Y₂O₃. The adhesive 31 has gas permeability and electrical conductivity.

In the example illustrated in FIG. 6A, the adhesive 31 is located between the fuel electrode 3 and the support plate 7 (coating layer 71). However, the adhesive 31 need not be located therebetween.

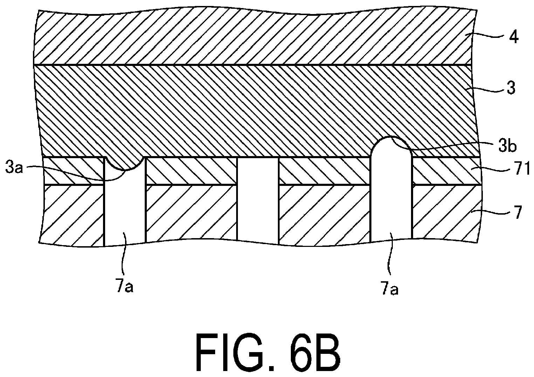

FIG. 6B is a cross-sectional view illustrating another example of the region A illustrated in FIG. 1A. As illustrated in FIG. 6B, the fuel electrode 3 and the support plate 7 (coating layer 71) may face each other with no adhesive interposed therebetween. The fuel electrode 3 facing the openings 7a and serving as the first electrode may protrude into the openings 7a (e.g., the state 3a). Since the fuel electrode 3 protrudes into the openings 7a, for example, even when no adhesive is interposed therebetween, the bonding strength between the fuel electrode 3 and the support plate 7 (coating layer 71) is improved, and thus the cell 1 has improved durability.

Note that the fuel electrode 3 may be located spaced apart from the openings 7a (e.g., the state 3b). The adhesive 31 may be located between the fuel electrode 3 and the support plate 7 (coating layer 71), and the adhesive 31 may be located inside the openings 7a.

### Variations of Cell

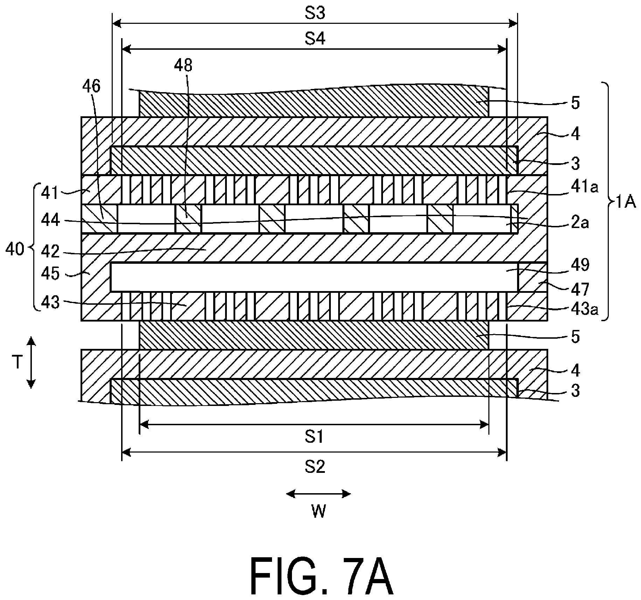

FIG. 7A is a cross-sectional view illustrating an example of a cell according to a variation of the embodiment. As illustrated in FIG. 7A, a cell 1A includes a structure 40 made of metal located between element portions that are adjacent in the thickness direction T. The structure 40 includes a first support portion 41, a channel portion 42, a second support portion 43, and connecting portions 44 and 45.

One surface of the first support portion 41 supports the fuel electrode 3 of the element portion, and the other surface on the opposite side to that of the one surface of the first support portion 41 faces the gas-flow passages 2a. The first support portion 41 also includes openings 41a that penetrate from the one surface to the other surface. The gas-flow passages 2a and the fuel electrode 3 are in communication with each other through the openings 41a. The first support portion 41 is an example of the first metal portion.

One surface of the channel portion 42 faces the gas-flow passages 2a, and the other surface of the channel portion 42 faces an air introduction portion 49. The channel portion 42 is an example of the second metal portion.

One surface of the second support portion 43 supports the air electrode 5 of the element portion included in an adjacent cell 1A, and the other surface on the opposite side to that of the one surface of the second support portion 43 faces the air introduction portion 49. The second support portion 43 includes openings 43a that penetrate from the one surface to the other surface. The air introduction portion 49 and the air electrode 5 are in communication with each other through the openings 43a. The second support portion 43 is an example of a fourth metal portion.

The connecting portion 44 connects the first support portion 41 and the channel portion 42. The connecting portion 44 is located on one end side in the width direction W, and connects the first support portion 41 and the channel portion 42. A spacer 46 is located on the other end side in the width direction W with the gas-flow passages 2a interposed between the connecting portion 44 and the spacer 46. The spacer 46 ensures the airtightness of the gas-flow passages 2a and the strength of the structure 40.

The connecting portion 45 connects the channel portion 42 and the second support portion 43. The connecting portion 45 is located on the other end side in the width direction W, and connects the channel portion 42 and the second support portion 43. A spacer 47 is located on the other end side in the width direction W with the gas-flow passages 2a interposed between the connecting portion 45 and the spacer 47. The spacer 47 ensures the strength of the structure 40.

Since the structure 40 is constituted by one continuous metal material in this manner, the electrical conductivity increases compared to a case in which a plurality of metal materials are stacked on each other. This reduces the internal resistance of the cell 1A, and thus improves the battery performance. Since the number of parts is reduced, the bonding or adhering points between members are reduced. This makes it relatively easy to ensure the airtightness of the gas-flow passages 2a, for example, and the cell 1A can have enhanced durability.

As illustrated in FIG. 7A, reinforcing portions 48 serving as the third metal portion may be located inside the gas-flow passages 2a. This can further enhance the strength of the structure 40, and thus the cell 1A can have enhanced durability. This can also impart pressure loss to the fuel gas flowing inside the gas-flow passages 2a, and thus the fuel gas can easily flow into the opening 41a that are in communication with the fuel electrode 3. Although not illustrated, reinforcing portions may be located inside the air introduction portion 49.

Here, in comparison between the area S1 of the air electrode 5 as viewed in plan view (top surface view) and the area S2 of the regions where the openings 43a are located, the relationship of S1 < S2 may be satisfied. As a result, the entire surface of the air electrode 5 having the area S1 can be effectively utilized for battery reaction.

The outside of the cell 1A and the air introduction portion 49 are in communication with each other through the openings 43a located at the end portions in the width direction W. Accordingly, the oxygen-containing gas (air) can be easily taken into the inside of the cell 1A via the openings 43a. Note that in FIG. 7A, a configuration is illustrated in which the opening 43a located at both end portions in the width direction W are in communication with the outside of the cell 1A. However, the present disclosure is not limited thereto, and an opening 43a located at one end in the width direction W may be in communication with the outside of the cell 1A.

In comparison between the area S3 of the fuel electrode 3 as viewed in plan view (top surface view) and the area S4 of the regions where the openings 41a are located, the relationship of S3 > S4 may be satisfied. As a result, the airtightness of the fuel electrode 3 can be ensured.

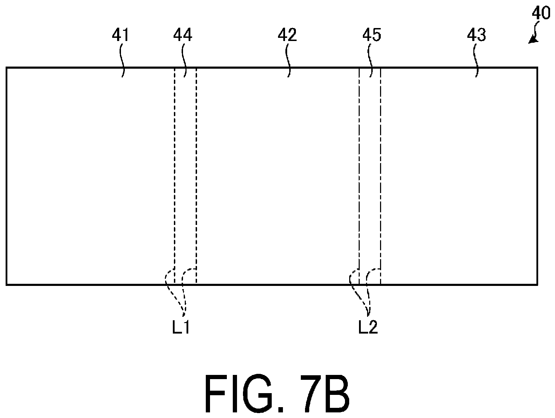

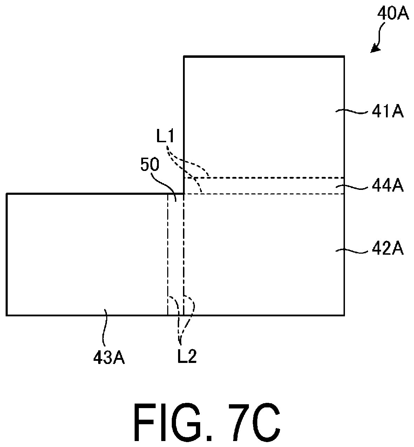

A manufacturing example of the structure 40 will be described using FIGs. 7B and 7C. FIG. 7B is a developed view illustrating an example of the structure 40 according to the embodiment. FIG. 7C is a developed view illustrating another example of the structure 40 according to the embodiment. Note that in FIGs. 7B and 7C, illustration of the openings 41a and 43a is omitted.

As illustrated in FIG. 7B, the structure 40 can be manufactured by bending a rectangular plate-shaped member made of a metal material. Specifically, the structure 40 illustrated in FIG. 7A can be manufactured, for example, by making a mountain fold at the line L1 and making a valley fold at the line L2.

As illustrated in FIG. 7C, a structure 40A similar to the structure 40 may be manufactured by bending a rectangular plate-shaped member made of a metal material. In the example illustrated in FIG. 7C, the structure 40A including a first support portion 41A, a channel portion 42A, a second support portion 43A, a connecting portion 44A, and a connecting portion 50 can be obtained by making a mountain fold at the line L1 and making a valley fold at the line L2. The first support portion 41A, the channel portion 42A, the second support portion 43A, and the connecting portion 44A correspond to the first support portion 41, the channel portion 42, the second support portion 43, and the connecting portion 44 illustrated in FIG. 7B, respectively. The configuration corresponding to the connecting portion 45 in FIG. 7B may be constituted by a spacer or the like, for example.

### Module

A module 100 according to an embodiment of the present disclosure that uses the aforementioned cell stack device 10 will be described with reference to FIG. 8. FIG. 8 is an exterior perspective view illustrating a module according to the embodiment. FIG. 8 illustrates a state in which a front surface and a rear surface, which are part of a housing container 101, are removed and the cell stack device 10, which is a fuel cell housed inside, is pulled out to the rear.

As illustrated in FIG. 8, the module 100 includes the housing container 101, and the cell stack device 10 housed in the housing container 101. Also, the reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through the raw fuel supply pipe 103. The reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reforming reaction.

Then, the fuel gas generated by the reformer 102 is supplied to the gas-flow passage 2a (see FIG. 1A) of the cell 1 through the gas circulation pipe 20, the gas tank 16, and the support member 14.

Also, in the module 100 having the configuration mentioned above, the temperature in the module 100 during normal power generation is about 500°C to 1000°C due to combustion of gas and power generation by the cell 1.

As described above, such a module 100 houses the cell stack device 10 including a plurality of cells 1 having high durability, and thus the module 100 can have enhanced durability.

### Module Housing Device

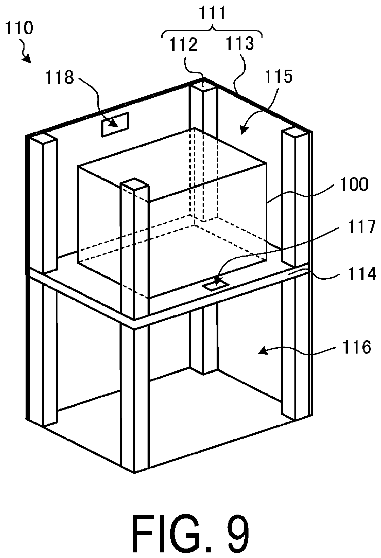

FIG. 9 is an exploded perspective view illustrating an example of a module housing device according to an embodiment. A module housing device 110 according to an embodiment includes an external case 111, a module 100 illustrated in FIG. 8, and an auxiliary device (not illustrated). The auxiliary device operates the module 100. The module 100 and the auxiliary device are contained within the external case 111. Note that in FIG. 9, a portion of the configuration is omitted.

The external case 111 of the module housing device 110 illustrated in FIG. 9 includes columns 112 and external plates 113. A dividing plate 114 vertically partitions the interior of the external case 111. The space above the dividing plate 114 in the external case 111 is a module housing room 115 that houses the module 100. The space below the dividing plate 114 in the external case 111 is an auxiliary device housing room 116 that houses the auxiliary device that operates the module 100. Note that in FIG. 9, the auxiliary device housed in the auxiliary device housing room 116 is omitted.

The dividing plate 114 includes an air circulation hole 117 for causing air in the auxiliary device housing room 116 to flow into the module housing room 115 side. The external plates 113 constituting the module housing room 115 includes an exhaust hole 118 for discharging air inside the module housing room 115.

As described above, such a module housing device 110 includes the module 100 having high durability in the module housing room 115, and thus the module housing device 110 can have enhanced durability.

Note that although description with illustration is omitted, a module 100 and a module housing device 110 that uses the cell stack device 10A illustrated in FIG. 7A can also be constituted like the module 100 and the module housing device 110 illustrated in FIGs. 8 and 9, respectively.

### Other Variations

In the embodiments described above, an example is illustrated in which the fuel electrode is located in the structure 2 and the air electrode is located on the surface of the cell. However, the present disclosure can also be applied to an opposite arrangement, that is, a cell stack device in which the air electrode is located in the structure 2 and the fuel electrode is located on the surface of the cell.

In FIG. 7A, the cell 1A that uses the structure 40 in which the first support portion 41, the channel portion 42, the second support portion 43, and the connecting portions 44 and 45 are integrated has been described. However, a cell may be manufactured using a portion of such a structure 40. For example, the first support portion 41, the channel portion 42, and the connecting portion 44 may be integrated, and an electrically conductive member 6 (see FIG. 1A) may be positioned at the rear surface of the channel portion 42 instead of the second support portion 43 and the connecting portion 45.

Further, in the aforementioned embodiment, the "cell", the "cell stack device", the "module", and the "module housing device" are exemplified by the fuel cell, a fuel cell stack device, a fuel cell module, and a fuel cell device, respectively, but they may also be exemplified by an electrolytic cell, an electrolytic cell stack device, an electrolytic module, and an electrolytic device, respectively.

While the present disclosure has been described in detail, the present disclosure is not limited to the aforementioned embodiment, and various changes, improvements, and the like can be made without departing from the gist of the present disclosure.

As described above, the cell 1 according to the embodiment includes the element portion, gas-flow passages 2a, the first metal portion (support plate 7), the second metal portion (sealing plate 9), and reinforcing portions 8a. Reaction gas flows through the gas-flow passages 2a. The first metal portion (support plate 7) is located between one surface side of the gas-flow passages 2a and the element portion, and supports the element portion. The second metal portion (sealing plate 9) is located on the other surface side opposite to the one surface side of the gas-flow passages 2a. The reinforcing portions 8a are located inside the gas-flow passages 2a, and face the first metal portion (support plate 7) and the second metal portion (sealing plate 9). This can enhance the durability of the cell 1.

The cell stack device 10 according to the embodiment includes the cell stack 11 in which a plurality of cells 1 are stacked on each other. This can enhance the durability of the cell stack device 10.

Further, the module 100 according to the embodiment includes the cell stack device 10 described above, and the housing container 101 that houses the cell stack device 10. This can enhance the durability of the module 100.

Further, the module housing device 110 according to the embodiment includes the module 100 described above, the auxiliary device for operating the module 100, and the external case that houses the module 100 and the auxiliary device. This can enhance the durability of the module housing device 110.

Noted that the embodiment disclosed herein is exemplary in all respects and not restrictive. Indeed, the aforementioned embodiment can be embodied in a variety of forms. Furthermore, the aforementioned embodiment may be omitted, replaced, or changed in various forms without departing from the scope of the appended claims and the purpose thereof.

### REFERENCE SIGNS

1 Cell
6 Electrically conductive member
10 Cell stack device
11 Cell stack
12 Fixing member
13 Bonding material
14 Support member
15 Support body
16 Gas tank
17 End current collector
100 Module
110 Module housing device

## Claims

1. A cell comprising:
an element portion;
a gas-flow passage through which reaction gas flows;
a first metal portion
located between one surface side of the gas-flow passage and the element portion and
supporting the element portion;
a second metal portion located on another surface side opposite to the one surface side of the gas-flow passage; and
a reinforcing portion
located inside the gas-flow passage and
facing the first metal portion and the second metal portion.

2. The cell according to claim 1, wherein
the first metal portion is configured to transmit the reaction gas between the gas-flow passage and the element portion, and
the second metal portion does not transmit the reaction gas.

3. The cell according to claim 1 or 2, further comprising:
a third metal portion
located between the first metal portion and the second metal portion, the first metal portion and the second metal portion facing each other with the gas-flow passage interposed therebetween, and
comprising the reinforcing portion.

4. The cell according to any one of claims 1 to 3, wherein
the gas-flow passage comprises an inlet and an outlet for the reaction gas, and
the reinforcing portion extends in a second direction intersecting a first direction directed from the inlet toward the outlet.

5. The cell according to any one of claims 1 to 4, wherein
the first metal portion comprises an opening through which the gas-flow passage and the element portion are in communication with each other and
a first electrode of the element portion faces the opening, and protrudes into the opening or is spaced apart from the opening.

6. The cell according to any one of claims 1 to 5, wherein
the first metal portion and the second metal portion are constituted by a continuous metal material.

7. The cell according to any one of claims 1 to 6, further comprising:
a fourth metal portion located on an opposite side of the gas-flow passage with the second metal portion interposed between the fourth metal portion and the gas-flow passage, wherein
the first metal portion, the second metal portion, and the fourth metal portion are constituted by a continuous metal material.

8. The cell according to any one of claims 1 to 7, further comprising:
a fourth metal portion located on an opposite side of the gas-flow passage with the second metal portion interposed between the fourth metal portion and the gas-flow passage; and
a coating layer located between the fourth metal portion and an oxidizing atmosphere, the coating layer containing at least one of zinc, manganese, and cobalt.

9. A cell stack device comprising the cell according to any one of claims 1 to 8 in plurality.

10. A module comprising:
the cell stack device according to claim 9; and
a housing container configured to house the cell stack device.

11. A module housing device comprising:
the module according to claim 10;
an auxiliary device configured to operate the module; and
an external case configured to house the module and the auxiliary device.
